# EUROPEAN PATENT APPLICATION

(11) **EP 1 016 518 A1**
(43) Date of publication of application: **05.07.2000**
(21) Application number: 98911182.8
(22) Date of filing: 02.04.1998
(51) Int. Cl.: B32B 31/20, B29C 47/02

(54) **MULTILAYER THERMOPLASTIC RESIN SHEET MANUFACTURING METHOD, AND MULTILAYER THERMOPLASTIC RESIN SHEET**

(30) Priority: 04.04.1997 JP 8664897; 13.05.1997 JP 12217297
(71) Applicant: IDEMITSU PETROCHEMICAL CO., LTD., Tokyo 108-0014 (JP)
(72) Inventor: FUJII, Atsushi, Chiba-ken 299-0205 (JP); UCHIYAMA, Katsumi, Chiba-ken 299-0205 (JP); FUNAKI, Akira, Chiba-ken 299-0205 (JP); YUKUMOTO, Tohru, Chiba-ken 299-0205 (JP)
(74) Representative: Hucker, Charlotte Jane
(86) International application number: JP9801531
(87) International publication number: WO9845116

(57) **Abstract**

A method for efficiently manufacturing multi-layer thermoplastic resin sheet without damaging foamed resin layer, and a multi-layer thermoplastic resin sheet are provided. After bringing a thermoplastic resin film 19 into close contact with either one of a metal endless belt 15 (with surface roughness Ra: less than or the same as 0.5µm) or a roller 16, a foamed resin sheet 18 from a die 11 or a feed roller is superposed onto the thermoplastic resin film 19, and the laminated thermoplastic resin film 19 and the foamed resin sheet 18 are sandwiched and sheet-pressed between the belt 15 and the roller 16 to manufacture double-layer thermoplastic resin sheet 24, during the sheet-pressing operation, sheet-pressure applied is 0.05 to 1.00MPa, and sheet-pressure acting time is 0.5 to 10.0 seconds.

## Description

### Technical Field

The present invention relates to a manufacturing method of multi-layer thermoplastic resin sheet and a multi-layer thermoplastic resin sheet.

### Background Art

Laminated sheet having, for example, polystyrene resin layer as foamed resin layer, is used as a container of various foods such as instant noodles.

Such laminated sheet is manufactured, for instance, by superposing a thermoplastic resin film extruded from an extruder to a polystyrene foamed resin sheet and laminating them by applying pressure between a pair of rollers (see Publication of Japanese Patent Laid-Open No. Hei 9-19968). Incidentally, heat lamination and adhesive are also employed instead of the extrusion lamination.

However, when the polystyrene foamed resin sheet and the thermoplastic resin film are laminated by pressurizing force between the pair of roller, approximately linear pressure is applied to the sheet and the film and the polystyrene foamed resin layer can be damaged, according to magnitude of the pressure. It is also likely that secondary foaming of the sheet can be insufficient, secondary foamability during thermoforming process can be deteriorated, and appearance can be deteriorated on account of generation of corch Further, the processing speed can also be limited.

An object of the present invention is to provide a manufacturing method of multi-layer thermoplastic resin sheet and multi-layer thermoplastic resin sheet made therefrom for efficiently producing foamed sheet without damaging the foamed resin layer while controlling secondary foamability as the sheet.

### Disclosure of the Invention

A manufacturing method of multi-layer thermoplastic resin sheet according to the present invention is characterized in having the steps of: bringing a thermoplastic resin film into close contact with either one of a heated belt or a roller; laminating a foamed resin sheet onto the thermoplastic resin film on either one of the belt or the roller; and sheet-pressing the laminated thermoplastic resin film and the foamed resin sheet by sandwiching between the belt and the roller.

The thermoplastic resin of the thermoplastic resin film may be any resin capable of being adhered to the foamed resin sheet, such as polystyrene, polyethylene, polypropylene, nylon-6 and nylon-66. Additives such as bulking agent, coloring agent etc. may be added to the thermoplastic resin as necessary. Anchor coating, prime coating and the like may be performed on a side of the thermoplastic resin film to be in contact with the foamed resin sheet.

Polystyrene, polyethylene, polypropylene, polyvinyl chloride, polyurethane and the like may be used as a resin of the foamed resin sheet.

The polystyrene resin includes styrene homopolymer, p-methyl styrene homopolymer, styrene-maleic anhydride copolymer, styrene-acrylonitrile copolymer, styrene-methacrylic acid copolymer, styrene-butadiene copolymer, styrene-buadiene-acrylonitrile copolymer, mixture of polystyrene and polyphenylene oxide and the like.

Expansion ratio of the foamed resin sheet is optional, however, expansion ratio of 1.5 to 20 is preferable. The thickness is also optional, however, preferably 0.5 to 10mm. The sheet may be so-called a film having relative small thickness.

Any foaming agent can be employed, where volatile foaming agent (such as propane and butane), inorganic gas foaming agent (such as carbon dioxide), decomposing foaming agent (such as azodicarbonamide) etc. can be used.

According to the present invention, since the thermoplastic resin film and the foamed resin sheet being brought into close contact with either one of the heated belt or the roller are sheet-pressed by the belt and the roller, secondary foaming when being made into a sheet can be controlled without damaging the foamed resin layer and the sheet and the film can be laminated without damaging the foamed resin layer.

Incidentally, it is only required as the multi-layer thermoplastic resin sheet according to the present invention that the thermoplastic resin film and the foamed resin sheet are included as double layer, and triple layer structure further having thermoplastic resin film, for example, is also possible.

In the manufacturing method of the multi-layer thermoplastic resin sheet according to the present invention, the belt is preferably a metal endless belt and the roller is preferably a metal roller.

At least circumference of the metal roller may be made of metal.

The material used as the metal may be stainless steel, carbon steel, titanium alloy and the like.

The endless belt may be of any thickness, however, preferably not less than 0.3mm, in view of strength.

Incidentally, the endless belt may be moved at any moving speed, however, preferably not less than 20m/min., in view of productivity.

In the manufacturing method of the multi-layer thermoplastic resin sheet according to the present invention, the metal endless belt and the metal roller preferably has surface roughness (center line average roughness: Ra) of less than or the same as 0.5µm.

In other words, the surfaces of the metal endless belt and the metal roller are mirror-finished. When the surface roughness exceeds 0.5µm, glossiness of the surface of the obtained sheet decreases.

In the manufacturing method of the multi-layer thermoplastic resin sheet according to the present invention, a sheet-pressure applied to the thermoplastic resin film and the foamed resin sheet by the belt and the roller during the sheet-pressing process is preferably 0.01 to 1.00MPa.

The sheet-pressure is controlled by a tension of the belt. When the sheet-pressure is less than 0.01MPa, lamination strength of the film and the sheet is decreased. On the other hand, when the sheet-pressure exceeds 1.00MPa, the thickness of the sheet is reduced because air bubbles in the foamed resin sheet are damaged. Preferably, the sheet-pressure is 0.1 to 0.7MPa.

In the manufacturing method of the multi-layer thermoplastic resin sheet according to the present invention, a sheet-pressure applied to the thermoplastic resin film and the foamed resin sheet by the belt and the roller during the sheet-pressing process is preferably 0.01 to 1.00MPa.

When the sheet-pressure acting time is less than 0.5 second, the lamination strength of the film and the sheet is decreased. Further, when the foamed resin sheet is specifically a polystyrene foamed resin sheet, sufficient secondary foaming cannot be obtained.

In the manufacturing method of the multi-layer thermoplastic resin sheet according to the present invention, a heating temperature of the thermoplastic resin film being in close contact with and heated by either one of the belt and the roller is preferably 120 to 180 °C.

When the heating temperature is less than 120°C, the lamination strength becomes insufficient and, on the other hand, when the heating temperature exceeds 180°C, corch is caused and secondary foamability during thermoforming process is deteriorated.

In the manufacturing method of the multi-layer thermoplastic resin sheet according to the present invention, the thermoplastic resin film superposed onto the belt is preferably pre-heated to more than or the same as 40 °C.

The pre-heating temperature of the first sheet thermoplastic resin is set not less than 40 °C, the upper limit being a temperature capable of peeling off from the pre-heating means. When the pre-heating temperature is less than 40 °C, though no problem occurs at low speed, air can be sandwiched between the belt and the first sheet thermoplastic resin in high-speed processing.

In the manufacturing method of the multi-layer thermoplastic resin sheet according to the present invention, the thermoplastic resin film is preferably pressed onto the belt or the roller by an elastic roller in bringing the thermoplastic resin film into close contact with either one of the heated belt or the roller.

The elastic roller may have an elastic portion at least at a circumference thereof. Heat-resistant silicone rubber or the like is preferably employed as the elastic member.

By using such elastic roller, air sandwiching between the belt and the thermoplastic resin film during high-speed lamination, wrinkle generation to the thermoplastic film, shift of the thermoplastic resin film from the belt etc. can be prevented.

In the manufacturing method of the multi-layer thermoplastic resin sheet according to the present invention, the elastic roller preferably has a temperature controlling roller for abutting to a surface of the elastic roller to control surface temperature of the elastic roller.

The temperature controlling roller may have a channel for the temperature controlling thermal medium therein. More than one temperature controlling roller may be provided as necessary.

In the manufacturing method of the multi-layer thermoplastic resin sheet according to the present invention, the elastic roller preferably contains thermal medium therein for keeping temperature difference between surface temperature of the elastic roller and the inner thermal medium to be not more than 80 °C.

Though the surface temperature of the elastic roller should be measured at a portion having the highest temperature (a portion closest to the belt), however, since it cannot be actually measured, the temperature immediately before the thermoplastic film contacts the elastic roller is taken.

In the manufacturing method of the multi-layer thermoplastic resin sheet according to the present invention, the thermo-plastic resin film is preferably in close contact with the heated belt or the roller by virtue of absorption force of static electricity.

The adhesion to the belt or the roller by applying static electricity is one of conventionally well-known techniques.

In the manufacturing method of the multi-layer thermoplastic resin sheet according to the present invention, the thermoplastic resin film is preferably superposed to the belt after coating releasable material onto a surface of the thermoplastic resin film to be in contact with the belt.

Liquid silicone emulsion etc., solid starch particle, silicone particle, acryl resin particle and the like can be preferably used as the releasable material.

The releasable material may be coated by either in-line or off-line (using a film having the releasable material previously coated thereon).

Accordingly, since the releasable material is coated onto a surface of the thermoplastic resin film in contact with the belt, the thermoplastic resin sheet can be easily released without lowering the temperature of the belt during high-speed manufacturing.

In the manufacturing method of the multi-layer thermoplastic resin sheet according to the present invention, the laminated thermoplastic resin film and the foamed resin sheet is preferably cooled by a cooling means after the sheet-pressing process, and the laminated thermoplastic resin film and the foamed resin sheet are preferably peeled off from the belt thereafter.

Any arrangement is possible as the cooling means, where spraying equipment of water, air etc. can be used.

A multi-layer thermoplastic resin sheet according to the present invention is obtained by the aforesaid manufacturing method.

The multi-layer thermoplastic resin sheet can be suitably used for manufacturing a body of a container and cover thereof.

In the multi-layer thermoplastic resin sheet according to the present invention, the thermoplastic resin film preferably has a printed surface thereon, a pitch change rate of the printed surface being less than 1% and pitch variation coefficient being less than 2.5 X 10⁻³.

Having small printing pitch change, the multi-layer thermoplastic resin sheet can be suitably used as, for instance, cover for various food container such as instant noodle.

### Brief Description of Drawings

Fig. 1 is a summarized view of equipment used in a manufacturing method according to first embodiment of the present invention; and
Fig. 2 is a summarized view of equipment used in a manufacturing method according to second embodiment of the present invention.

### Best Mode for Carrying out the Invention

### [First Embodiment]

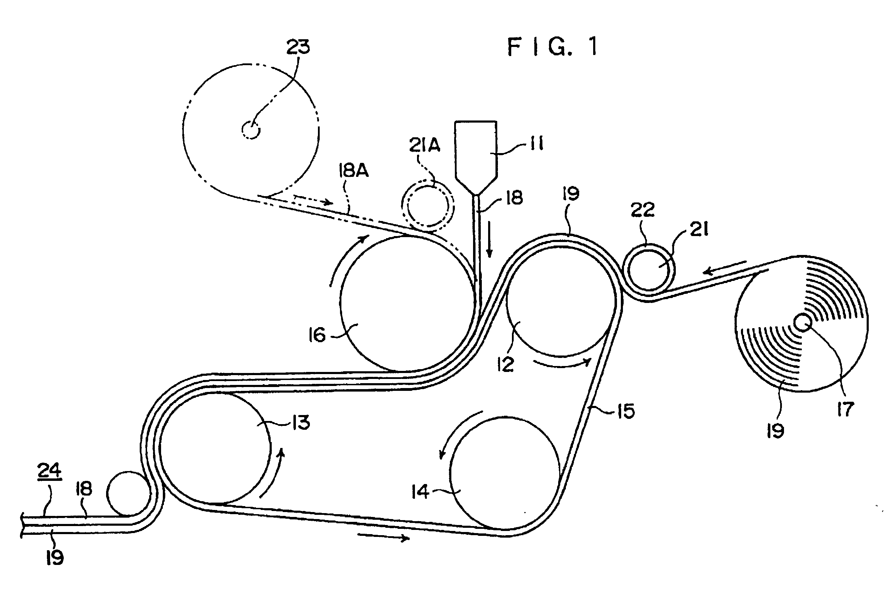

A manufacturing method of double-layer thermoplastic resin sheet 24 according to first embodiment of the present invention will be described below with reference to Fig. 1.

Initially, an arrangement of manufacturing equipment used in the manufacturing method will be described.

The manufacturing equipment has a die 11 of an extruder (not shown), first roller 12 for heating, second roller 13 for cooling, third roller 14 for heating, a metal endless belt 15 wound around the rollers 12 to 14, fourth roller 16 for cooling being held by the endless belt 15, feed roller 17 etc.

The extruder is, for example, a single spindle extruder, which is located at a position capable of feeding molten foamed resin sheet 18 extruded from the die 11 to a nip between the fourth roller 16 and the endless belt 15 immediately before being wound around the roller 16.

The first to third rollers 12 to 14 are located each vertex of a triangle, around which the metal endless belt 15 is wound. The endless belt 15 is made of stainless steel and the like and has mirror-finished surface having surface roughness (center line average roughness: Ra) of less than or the same as 0.5µm. The third roller 14 applies tension to the endless belt 15 as well as heat the endless belt 15.

The fourth roller 16 is located on an outside of the endless belt 15 between the first and the second rollers 12 and 13 to push the endless belt 15 inward. In other words, die endless belt 15 is held by a part of the outer circumference of the fourth roller 16. At least outer circumference of the roller 16 is made of stainless steel etc., which has a mirror-finished surface having surface roughness (Ra) of less than or the same as 0.5µm.

An appropriate heating means or cooling means are built inside the heating and cooling rollers 12 to 14 and 16. Optional number of the rollers is connected to a rotational driving means.

A thermoplastic resin film 19 is wound around the feed roller 17. The feed roller 7 is disposed to a location capable of feeding the thermoplastic resin film 19 to the endless belt wound around the first roller 12.

An elastic roller 21 for pressing die thermoplastic film 19 fed by the feed roller 17 to the belt 15 is provided adjacent to the first roller 12. An elastic member 22 such as silicone rubber is attached to an outer circumference of the elastic roller 21.

Next, the manufacturing method of the double-layer thermoplastic resin sheet 24 using the manufacturing equipment will be described below.

The thermoplastic resin film 19 is fed by the feed roller 17 and the thermoplastic resin film 19 is superposed to the endless belt 15 to be in close contact with the first roller 12 through the elastic roller 21. Incidentally, prior to bringing into close contact with the endless belt 15, the thermoplastic resin film 19 is preferably pre-heated over 40 °C by more than one pre-heating roller provided closer to the feeding roller 17 than the elastic roller 21 or an appropriate heating device provided adjacent to feeding path.

Subsequently, the thermoplastic resin film 19 in close contact with the endless belt 15 is moved toward the fourth roller 16 by rotating the endless belt 15. When the thermoplastic resin film 19 is moved, the thermoplastic resin film 19 is heated to 120 to 180 °C by the first roller 12 through the endless belt 15.

On the other hand, the molten foamed resin sheet 18 extruded from the die 11 is introduced between the fourth roller 16 and the endless belt 15 immediately before being held by the roller 16 so that the foamed resin sheet 18 is in close contact with the thermoplastic resin film 19. The thermoplastic resin film 19 and the foamed resin sheet 18 laminated in two layers on the belt 15 are sheet-pressed toward the roller 16 by the belt 15. During the sheet-pressing process, die sheet-pressure to the double-layered sheet 24 applied by the belt 15 and the roller 16 is 0.01 to 1.00MPa. The sheet-pressure acting time is 0.5 to 10.0 seconds.

Subsequently, the laminated thermoplastic resin film 19 and the foamed resin sheet 18 are moved toward the second roller 13 by the rotation of the endless belt 15 and are peeled off from the endless belt 15 after being cooled at the second roller 13, thereby obtaining the double-layer thermoplastic resin sheet 24 according to the present embodiment.

Incidentally, though the foamed resin sheet 18 is extruded onto the thermoplastic resin film 19 to be laminated in the above-described manufacturing method, the foamed resin sheet 18A may be fed from the feed roller 23 to be in close contact with the fourth roller 16 by the elastic roller 21A, so that the laminated thermoplastic resin film 19 and the foamed resin sheet 18 are sandwiched between the belt 15 and the roller 16 to be sheet-pressed.

Though the thermoplastic resin film 19 is in close contact with the endless belt 15 abutting the first roller 12, the thermoplastic resin film 19 may be in close contact with the heated fourth roller 16 by locating the feed roller 17 opposite to the above arrangement relative to the die 11. In this case, the feed roller 17 is disposed at a roller 23 position shown in dotted line in Fig. 1 and the thermoplastic resin film 19 is fed according to the path of the sheet 18A also shown in dotted line to be laminated on an upside of the foamed resin sheet 18 fed by the die 11.

Though the thermoplastic resin film 19 is in close contact with the endless belt 15 using the elastic roller 21, the thermoplastic resin film 19 may be in close contact with the endless belt 15 by virtue of absorption force of static electricity. The arrangement is possible using known techniques, where, for instance, the thermoplastic resin film 19 is absorbed by disposing an electrode for charging electricity to the endless belt 15 immediately before the first roller 12 and applying either one of plus and minus electric charge to the endless belt 15, thereby absorbing the thermoplastic resin film 19 at a position of the first roller 12. The electricity may be charged on the first roller 12.

### [Second Embodiment]

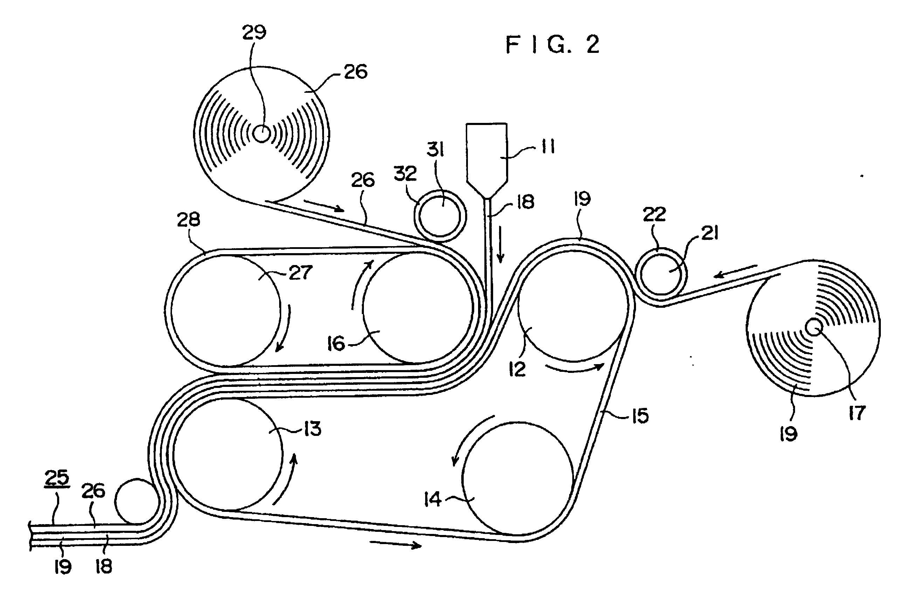

Manufacturing method of triple-layer thermoplastic resin sheet 25 according to second embodiment of the present invention will be described below with reference to Fig. 2.

The manufacturing equipment used in the manufacturing method according to the second embodiment has a system for feeding the thermoplastic resin film 26 as the third layer in addition to the manufacturing equipment according to the first embodiment.

In other words, a cooling fifth roller 27 is provided to abut to the second roller 13 through the endless belt 15 and another endless belt 28 is wound between the fifth roller 27 and the fourth roller 16. Accordingly, a pair of endless belt 15 and 28 is opposingly provided between the fourth roller 16 and the fifth roller 27.

Further, a feed roller 29 for feeding the thermoplastic resin film 26 as the third layer is provided. An elastic roller 31 for pressing the thermoplastic resin film 26 against the belt 28 is provided adjacent to the fourth roller 16. The elastic roller 31 has an elastic member 32 such as silicone rubber on an outer circumference thereof.

The feed roller 17 for feeding the thermoplastic resin film 19 as the first roller and die 11 for feeding the foamed resin sheet 18 as the second layer are respectively provided in the same manner as the first embodiment.

Next, a manufacturing method of the triple-layer thermoplastic resin sheet 25 using the aforesaid manufacturing equipment will be described below.

The thermoplastic resin film 19 as the first layer is fed by the feed roller 17, so that the thermoplastic resin film 19 is in close contact with the endless belt 15 abutting the first roller 12 through the elastic roller 21 and the thermoplastic resin film 19 is moved toward the fourth roller 16 by rotating the endless belt 15. When the thermoplastic resin film 19 is moved, the thermoplastic resin film 19 is heated to 120 to 180 °C by the first roller 12 through the endless belt 15.

Subsequently, the thermoplastic resin film 26 as the third layer is pressed against the endless belt 28 wound around the fourth roller 16 through the elastic roller 31, and the molten foamed resin sheet 18 extruded from the die 11 is introduced and superposed between the thermoplastic resin film 26 as the third layer and the thermoplastic resin film 19 on the endless belt 15 immediately before being held by the first roller 12. The laminated thermoplastic resin films 19 and 26 and the foamed resin sheet 18 are sheet-pressed against the fourth roller 16 while being sandwiched by the pair of belt 15 and 28.

During the sheet-pressing process, the sheet-pressure applied to the triple-layer sheet 25 by the two belts 15 and 28 and the fourth roller 16 is 0.01 to 1.00MPa and the acting time thereof is 0.5 to 10.0 seconds.

Subsequently, the laminated triple-layer sheet 25 is moved by the rotation of the endless belts 15 and 28 toward the second and the fifth rollers 13 and 27 to be cooled and, thereafter, peeled off from the endless belts 15 and 28 to obtain the triple-layer thermoplastic resin sheet 25 according to the present embodiment.

Various modifications and the like as mentioned in the first embodiment are possible in the present embodiment.

### [Third Embodiment]

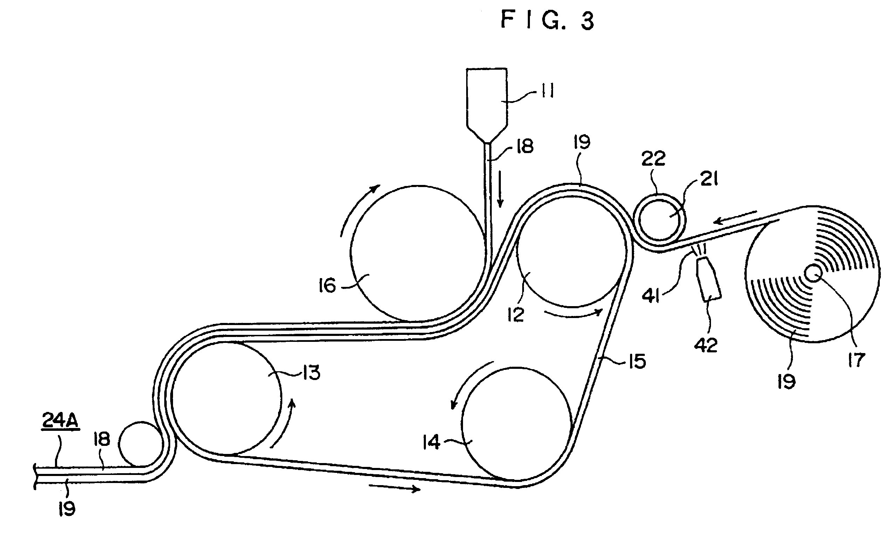

Double-layer thermoplastic resin sheet 24A according to the third embodiment of the present embodiment will be described below with reference to Fig. 3.

The manufacturing equipment used in the manufacturing method of the third embodiment is characterized in having a coating equipment 42 of releasable material 41 and the rest is the same as the manufacturing equipment according to the aforesaid first embodiment.

In other words, the coating equipment 42 of the releasable material 41 is provided between the feed roller 19 and the first pre-heating roller 21. The coating equipment 42 is located on the same side as the endless belt 15 relative to the film 19 for coating the releasable material 41 onto a side of the thermoplastic resin film 19 touching the endless belt 15.

The manufacturing method of the thermoplastic resin sheet 24A according to the present embodiment is approximately the same as the first embodiment, where the releasable material 41 is blown by the coating equipment 42 to the side of the thermoplastic resin film 19 touching the endless belt 15 fed from the feed roller 19.

### [Fourth Embodiment]

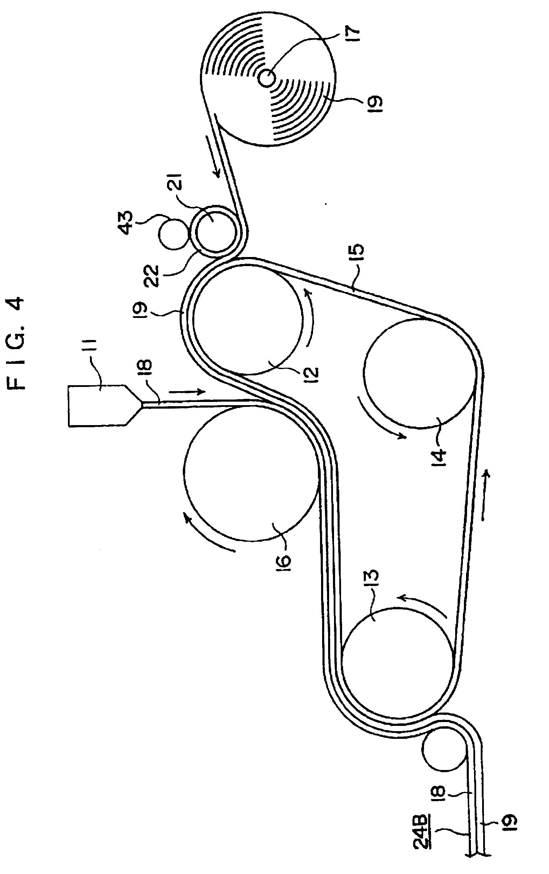

Double-layer thermoplastic resin sheet 24B according to the fourth embodiment of the present invention will be described below with reference to Fig. 4.

The manufacturing equipment used in the manufacturing method of the fourth embodiment is characterized in providing a temperature controlling roller 43 to the elastic roller 21, and the rest is the same as the manufacturing equipment of the first embodiment.

In other words, the metal temperature controlling roller 43 is disposed on an approximate backside of the elastic roller 21 abutting the thermoplastic resin film 19 to abut to outer circumference of the elastic roller 21. A channel of thermal medium (not shown) is formed inside the temperature controlling roller 43.

The manufacturing method of the thermoplastic resin sheet 24B according to the present embodiment is approximately the same as the first embodiment, where temperature difference between the surface temperature of the elastic roller 21 and the thermal medium inside the elastic roller 21 is maintained below 80 °C when the thermoplastic resin film 19 is superposed onto the endless belt 15 through the elastic roller 21. As described above, in order to keep the surface temperature of the elastic roller 21 below a predetermined temperature, the temperature difference is maintained by the temperature controlling roller 43.

### [Fifth Embodiment]

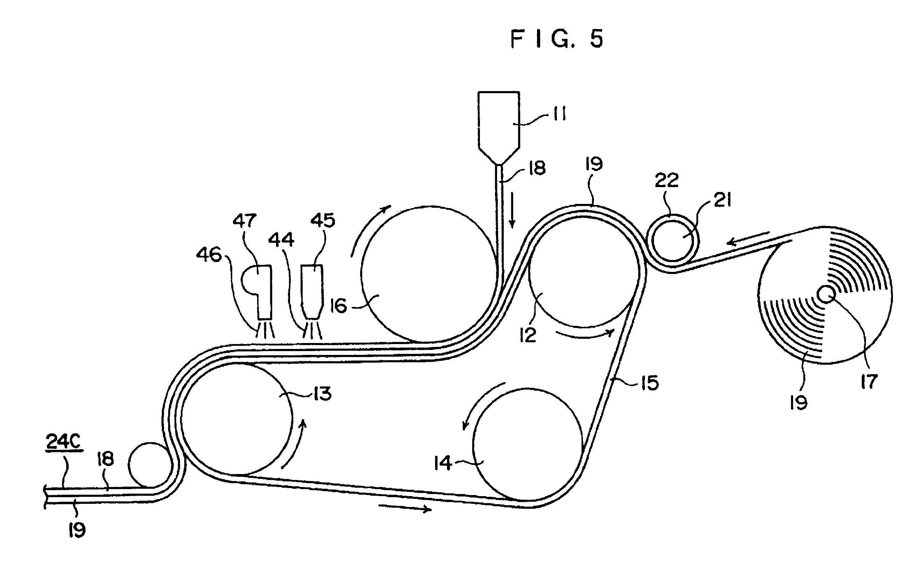

Double-layer thermoplastic resin sheet 24C according to the fifth embodiment of the present invention will be described below with reference to Fig. 5.

The manufacturing equipment used in the manufacturing method of the fifth embodiment is characterized in having a spraying equipment 45 of a mist 44 and a spraying equipment 47 of air 46 as cooling means for the laminated thermoplastic resin film 19 and the foamed resin sheet 18, and the rest is the same as the manufacturing equipment according to the first embodiment.

In other words, the spraying equipment 45 of the mist 44 is provided facing the foamed resin sheet 18 at approximate center of the second roller 13 and the fourth roller 16, and the spraying equipment 47 of the air 46 is provided facing the formed resin sheet 18 adjacent to the fourth roller 16.

The manufacturing method of the thermoplastic resin sheet 24C is approximately the same as the first embodiment, where the mist 44 is sprayed to the laminated thermoplastic resin film 19 and the foamed resin sheet 18 from the mist spraying equipment 45 to cool the laminated thermoplastic resin film 19 and the foamed resin sheet 18, and subsequently, the laminated thermoplastic resin film 19 and the foamed resin sheet 18 is cooled by spraying the air 46 from the air spraying equipment 47. Incidentally, only one of the mist 44 and the air 46 may be sprayed.

### [Experiment]

In the first embodiment, the double-layer thermoplastic resin sheet 24 was manufactured according to following specific manufacturing equipment and the manufacturing method.

### (Equipment)

Diameter of the first to fourth rollers 1000mm
Endless belt stainless steel, Ra: 0.2µm, width: 1200mm, length: 8.0m, thickness: 1.0mm

### (Condition]

Moving speed of the endless belt 20m/min.
Pre-heat temperature of the first thermoplastic resin film 70 °C
Temperature of first roller 130 °C.
Temperature of second roller 50 °C.
Temperature of third roller 150 °C
Temperature of fourth roller 40 °C.
Sheet-pressure to the double-layer sheet by the belt and the roller 0.1MPa.
Sheet-pressure acting time to the double-layer sheet 1.5 second.

### (Material)

Thermoplastic resin film oriented polystyrene film having 10mm grid printed thereon. CELLOMER GH-1 (tradename), manufactured by Okura Kogyo Co., Ltd. Width: 600mm, thickness: 0.03mm
Foamed resin sheet polystyrene foamed resin sheet A-180 (tradename), manufactured by JSP CORPORATION. Width: 640mm, Thickness: 2.1mm.

The double-layer thermoplastic resin sheet 24 obtained in the Experiment caused no rough portion on the sheet surface because the foamed resin sheet 18 was not damaged during lamination.

When adhesive tape was adhered on the thermoplastic resin film 19 side of the double-layer thermoplastic resin sheet 24, the foamed resin of the sheet 18 was broken without being peeled off at border of the film 19 and the sheet 18. Accordingly, it could be observed that the lamination strength between the film 19 and the sheet 18 was large.

Further, the pitch change rate of the printed surface after the lamination was measured and found to have +0.4% of MD and -0.3% of TD when expansion was represented as + and contraction was represented as -. The pitch variation coefficient was 0.8 x 10⁻³ in MD and 0.7X 10⁻³ inTD, both of which were below 2.5X10⁻³. Further, the thickness of the sheet 24 was changed from 2.2mm to 2.6mm, which shows good secondary foamability during thermoforming.

According to the present experiment, the double-layer thermoplastic resin sheet 24 could be manufactured extremely efficiently without causing deterioration in appearance such as corch

### Industrial Availability

The present invention can be used as a laminated sheet used for container of various foods such as instant noodles.

## Claims

1. A manufacturing method of multi-layer thermoplastic resin sheet, comprising the steps of:
bringing a thermoplastic resin film in close contact with either one of a heated belt and a roller;
laminating a foamed resin sheet onto the thermoplastic resin film on either one of the belt and the roller; and
sheet-pressing the laminated thermoplastic resin film and the foamed resin sheet by sandwiching between the belt and the roller.

2. The manufacturing method of multi-layer thermoplastic resin sheet according to Claim 1, wherein the belt is a metal endless belt and the roller is a metal roller.

3. The manufacturing method of multi-layer thermoplastic resin sheet according to Claim 2, wherein the metal endless belt and the metal roller has surface roughness (center line average roughness: Ra) of less than or the same as 0.5µm.

4. The manufacturing method of multi-layer thermoplastic resin sheet according to any one of Claims 1 to 3, wherein a sheet-pressure applied to the thermoplastic resin film and the foamed resin sheet by the belt and the roller during the sheet-pressing process is 0.01 to 1.00MPa.

5. The manufacturing method of multi-layer thermoplastic resin sheet according to any one of Claims 1 to 4, wherein sheet-pressure acting time applied to the thermoplastic resin film and the foamed resin by the belt and the roller is more than or the same as 0.5 second.

6. The manufacturing method of multi-layer thermoplastic resin sheet according to any one of Claims 1 to 5, wherein a healing temperature of the thermoplastic resin film being in close contact with and heated by either one of the belt and the roller is 120 to 180 °C.

7. The manufacturing method of multi-layer thermoplastic resin sheet according to any one of Claims 1 to 6, wherein the thermoplastic resin film superposed onto the belt is pre-heated to more than or the same as 40 °C.

8. The manufacturing method of multi-layer resin sheet according to any one of Claims 1 to 7, wherein the thermoplastic resin film is pressed onto the belt or the roller by an elastic roller in bringing the thermoplastic resin film into close contact with either one of the heated belt or the roller.

9. The manufacturing method of multi-layer thermoplastic resin sheet according to Claim 8, wherein the elastic roller has a temperature controlling roller for abutting to a surface of the elastic roller to control surface temperature of the elastic roller.

10. The manufacturing method of multi-layer thermoplastic resin sheet according to Claim 8 or 9, wherein the elastic roller contains thermal medium therein for keeping temperature difference between surface temperature of the elastic roller and the inner thermal medium to be not more than 80 °C.

11. The manufacturing method of multi-layer thermoplastic resin sheet according to any one of Claims 1 to 10, wherein the thermo-plastic resin film is in close contact with the heated belt or the roller by virtue of absorption force of static electricity.

12. The manufacturing method of multi-layer thermoplastic resin sheet according to any one of Claims 1 to 11, wherein the thermoplastic resin film is superposed to the belt after coating releasable material onto a surface of the thermoplastic resin film to be in contact with the belt.

13. The manufacturing method of multi-layer thermoplastic resin sheet according to any one of Claims 1 to 12, wherein the laminated thermoplastic resin film and the foamed resin sheet is cooled by a cooling means after the sheet-pressing process, and wherein the laminated thermoplastic resin film and the foamed resin sheet are peeled off from the belt thereafter.

14. A multi-layer thermoplastic resin sheet obtained by manufacturing method according to any one of Claims 1 to 13.

15. The multi-layer thermoplastic resin sheet according to Claim 14, wherein the thermoplastic resin film has a printed surface thereon, a pitch change rate of the printed surface being less than 1% and pitch variation coefficient being less than 2.5 X 10⁻³.
